# EUROPEAN PATENT APPLICATION

(11) **EP 4 667 802 A1**
(43) Date of publication of application: **24.12.2025**
(21) Application number: 24183433.2
(22) Date of filing: 20.06.2024
(51) Int. Cl.: F16L 39/00

(54) **COUPLING ASSEMBLY FOR A DOUBLE-CONTAINMENT PIPE SYSTEM AND COUPLING METHOD FOR CONNECTING A DOUBLE-CONTAINMENT PIPE SYSTEM**

(71) Applicant: F.I.P. Formatura Iniezione Polimeri SpA, 16015 Casella (GE) (IT)
(72) Inventor: COSTA, STEFANO, 16015 CASELLE, GENOVA (IT)
(74) Representative: Leihkauf, Steffen Falk

(57) **Abstract**

A coupling assembly (1) for a double-containment pipe system (100), said double-containment pipe system (100) comprising an inner pipe (20) for conveying a fluid, an outer containment pipe (10) arranged about said inner pipe (20) forming a cavity (30) between said inner pipe (20) and said outer pipe (10); wherein said coupling assembly (1) comprises: a coupling shell (80) comprising two half-shells (81, 82) removably couplable to each other fluid tight along at least one joining profile (85) between said two half-shells (81, 82), said two half-shells (81, 82) mutually defining an inner hollow compartment (83) adapted to accommodate part of said inner pipe (20), said coupling shell (80) defining a plurality of connection openings (86), each connection opening (86) of said plurality being divided, by said joining profile plane (85), into two opening portions, each belonging to one of said two half-shells, respectively; at least one connection bushing (50), each said at least one connection bushing (50) defining a central bushing axis (B-B), a first axial end portion (54) ending with a first free end (58), an opposite second axial end portion (55) ending with a second free end (59), an inner side surface (53) and an outer side surface (52), said second axial end portion (55) comprising connection means (62) for connecting said connection bushing (50) to a free end of a pipe element of said outer pipe (10), wherein said first axial end portion (54) and a respective connection opening of said plurality of connection openings (86) of said coupling shell (80) have mutually complementary shapes and comprise therebetween fluid-tight sealing means (71) and engagement means (72).

## Description

### Field of the invention

The present invention relates to a coupling assembly for a double-containment pipe system and also to a method for connecting two adjacent sections of a double-containment pipe system.

### Background art

In the field of pipe systems for conveying fluids, the risk is known of fluid leaks through connection zones between pipes and couplings, or through holes caused by corrosion or wear of the pipes.

In order to contain said losses in a defined volume, it is known to arrange said main pipe for conveying fluid, in a containment pipe having a larger diameter than that of the main pipe to form a tubular cavity between the main pipe and the containment pipe. Any fluid loss is thus contained within said cavity.

The inner pipe is generally formed by a plurality of straight tubular segments connected to one another by means of couplings.

Known couplings for a single pipe can be straight couplings, for example with two opposite coaxial connection openings for connecting two adjacent pipe sections coaxially to each other, or they can be elbow joints, wherein the axes of the two opposite openings are orthogonal to each other.

Such known couplings can have three connection openings for connecting three pipes to one another. In this case, two openings are generally coaxial to each other and the axis of the third opening is orthogonal to the axis of the other two openings.

Cross couplings are also known, having four paired coaxial connection openings, each of the two opening pairs having axes orthogonal to each other.

Double-containment couplings are known for double-containment pipe system applications.

Said double-containment couplings comprise an inner coupling coupled to an outer coupling sized so as to contain the inner coupling and form a cavity therebetween.

In order to support the inner coupling in the correct position with respect to the outer coupling, spacer support elements are provided interposed therebetween.

Said spacer support elements are generally glued between the inner and outer coupling.

This known type of product requires a relatively complex industrial assembly process, which is carried out in series.

This significantly increases the production cost of a double-containment coupling, which can be ten times higher than the cost of single couplings.

Furthermore, the diameter of the inner coupling and the diameter of the outer coupling, as well as the ratio between said diameters, vary at least according to the flow requirements of the plant and according to the physical parameters of the fluid to be conveyed and the external environment.

For example, for an inner pipe having a certain diameter, an outer, or containment pipe can be required, the diameter of which depends on the plant requirements, and vice versa.

This causes an important problem of dimensions and warehouse management, as it is necessary to store a high variety of different double-containment couplings, having different outer coupling diameters for one same inner pipe diameter.

Likewise, for one same outer coupling diameter, it is necessary to store a great variety of different double-containment couplings, having different inner coupling diameters.

In fact the double-containment couplings can be sleeve-couplings, with three or four openings. This multiplies the number of different products to be kept in stock.

The situation can be further aggravated by the demand for double-containment couplings having different diameters between the inlet and outlet of the coupling, e.g., they can have an inlet opening with a larger diameter than each of the outlet openings.

The high variety of products to be stored in the warehouse contributes to further increasing the sale price of each product.

Therefore, the need is felt to provide a coupling assembly for a double-containment pipe system, which is modular, i.e., which allows joining two or more double-containment pipe sections by mutually combining, in a modular and interchangeable manner, a few simple and economically produced components.

A further disadvantage of known double-containment couplings is the difficulty in mounting the pipes to the couplings, as the inner coupling and the outer coupling are fastened to each other in a single piece before mounting to the pipes to be connected. This means that the inner pipe and the outer pipe are simultaneously connected to the inner coupling and the outer coupling, and in the assembly process, it is not possible to verify the correct connection of the inner pipe to the inner coupling, which is the one that conveys the fluid, as said connection is hidden by the outer pipe.

Therefore, the need is felt to provide a coupling assembly for a double-containment pipe system, which allows connecting first the inner conduit to the inner coupling to verify the seal thereof, and then connecting the outer conduit to the outer coupling.

Furthermore, the need is felt to provide a coupling assembly for a double-containment pipe system, wherein the inner coupling can also be reached and inspected with the system mounted, in order to verify the seal thereof.

As a result of the structural and connection difficulty of known double-containment couplings, despite often ensuring the fluid-tight seal on the inner pipe, the inspectable double-containment couplings are also not able to ensure, at the same time, a stable and resistant commitment to high pressures between the outer pipe and the coupling.

Therefore, the need is felt to provide a double-containment coupling assembly which is modular and adaptable to a varying number of double-containment pipes, having varying diameters, and which simultaneously ensures not only the fluid-tight seal but also a stable engagement on each connection.

### Summary of the invention

It is the object of the present invention to develop and provide a coupling assembly for a double-containment pipe system, which allows fulfilling the above requirements and at least partially overcoming the above drawbacks with reference to the prior art.

In particular, it is the underlying task of the present invention to provide a coupling assembly for a double-containment pipe system, which is modular, i.e., which allows connecting two or more double-containment pipe sections by mutually combining, in a modular and interchangeable manner, a few simple and economically produced components.

It is another object of the present invention to provide a coupling assembly for a double-containment pipe system, which is modular and adaptable to a varying number of double-containment pipes, having varying diameters, and which ensures, at the same time, not only the fluid-tight seal but also a stable engagement on each connection.

It is another object of the present invention to provide a coupling assembly for a double-containment pipe system having a reduced production cost with respect to the prior art.

It is a further object of the present invention to provide a modular coupling assembly for a double-containment pipe system, which requires reduced storage costs, and thus lower sales costs.

It is a further object of the present invention to provide a coupling assembly for a double-containment pipe system, which allows connecting first the inner conduit to the inner coupling to verify the seal thereof, and then connecting the outer conduit to the outer coupling.

It is another object of the present invention to provide a coupling assembly for a double-containment pipe system, wherein the inner coupling can be reached and inspected also with the plant mounted, to verify the seal thereof.

These and further objects and advantages are achieved by means of a coupling assembly for a double-containment pipe system according to the independent claim 1, as well as a coupling method for connecting a double-containment pipe system according to the independent claim 20.

Further objects, solutions, and advantages are present in the embodiments described below and claimed in the dependent claims.

### Brief description of the drawings

The invention will be shown below by the description of embodiments thereof, given by way of non-limiting example, with reference to the accompanying drawings, in which:

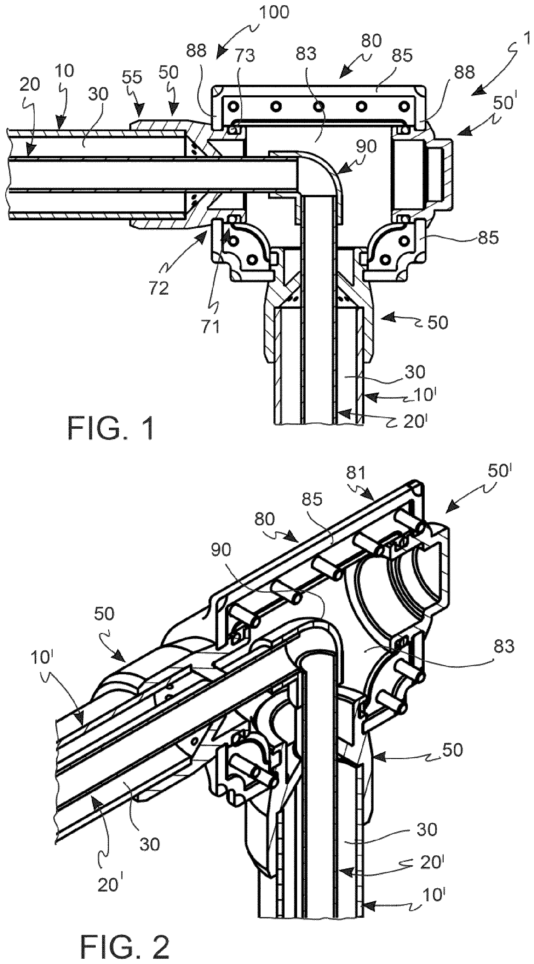

- figure 1 shows a sectional view of a coupling assembly according to the invention for a double-containment pipe system, wherein a half-shell has been removed to show the lay-out of the components inside the coupling shell;
- figure 2 shows an angled isometric view of the coupling assembly in figure 1;

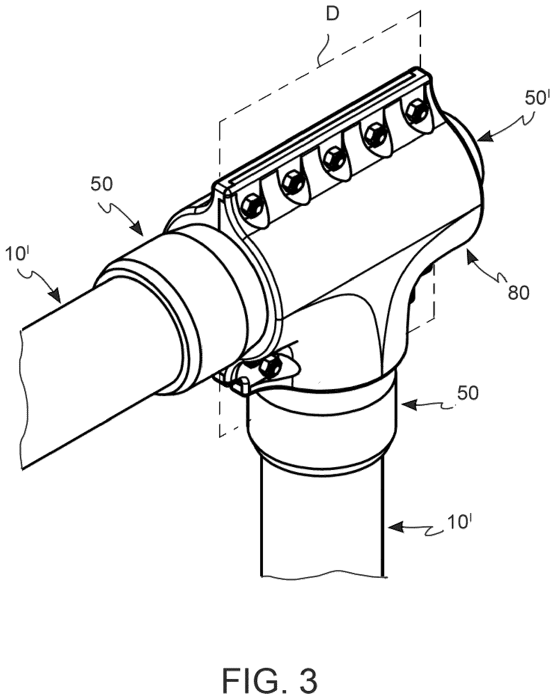

- figure 3 shows an angled isometric view of the assembly in figure 2, wherein the second half-shell is coupled to the first half-shell, in an assembled configuration;

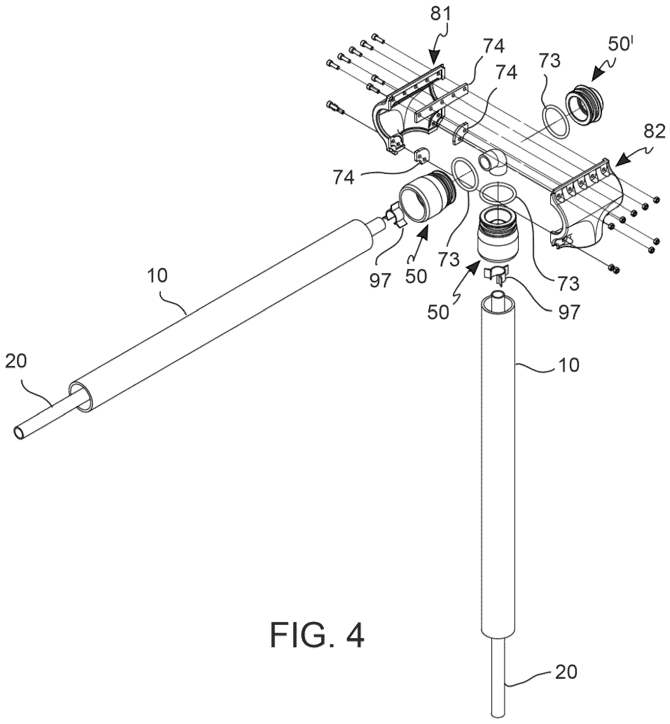

- figure 4 shows a disassembled exploded view of the assembly in figure 3;

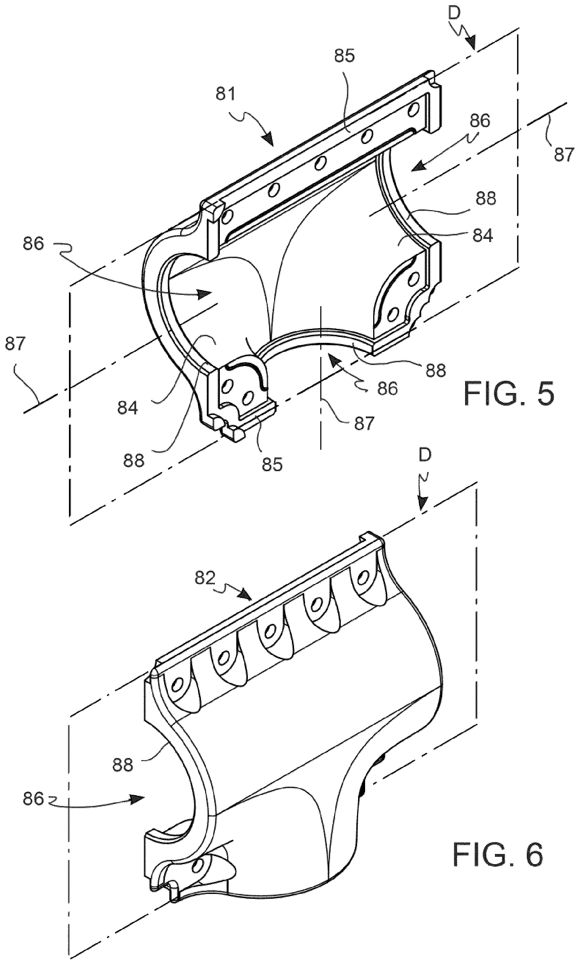

- figures 5 and 6 show the first and the second half-shell, respectively, in an angled isometric view;

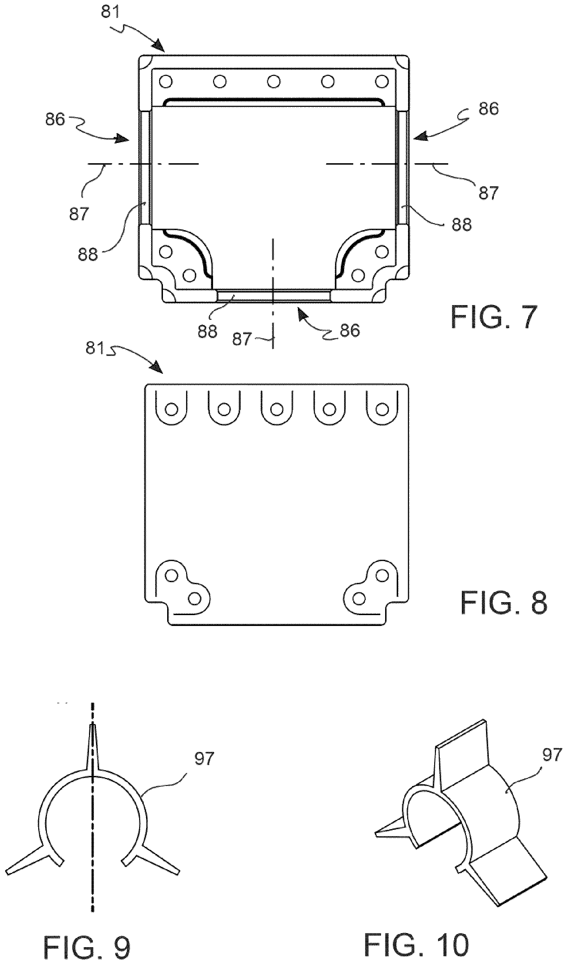

- figures 7 and 8 show the first and the second half-shell in figures 5 and 6 in an orthogonal view;
- figures 9 and 10 show an orthogonal view and an angled isometric view of a radial centering spacer element, which can be interposed between an outer pipe element and an inner pipe element to keep the inner pipe element coaxial to the outer pipe element;

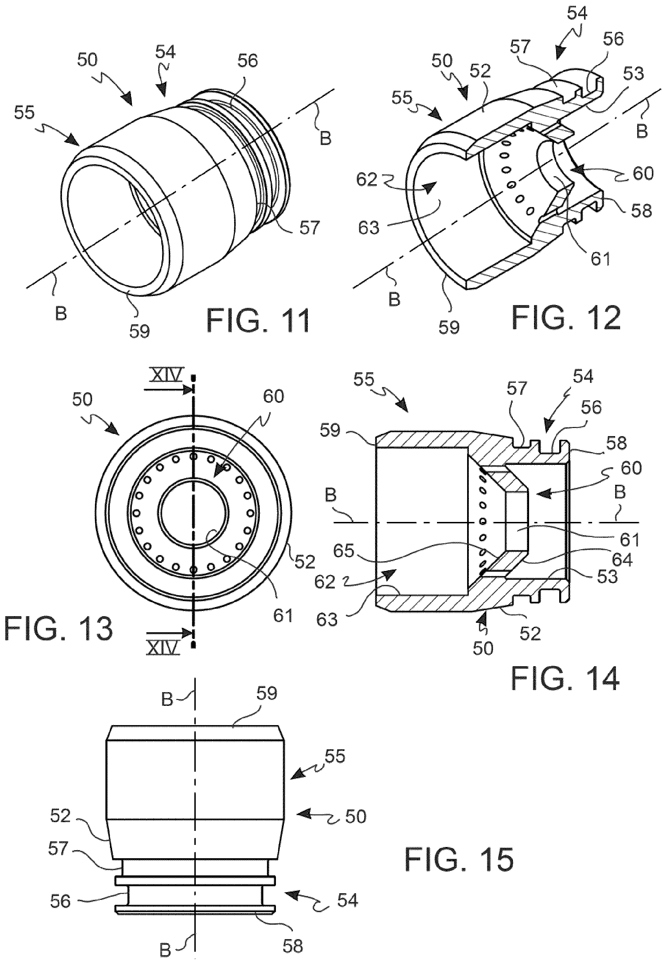

- figure 11 shows an angled isometric view of a connection bushing of the assembly according to the invention;
- figure 12 shows a sectional view of the connection bushing in figure 11 by means of an axial section plane XIV;
- figure 13 shows an axial orthogonal view of the connection bushing in figure 11;
- figure 14 shows a lateral sectional view of the connection bushing in figure 13;
- figure 15 shows a lateral sectional view of the connection bushing in figure 13;

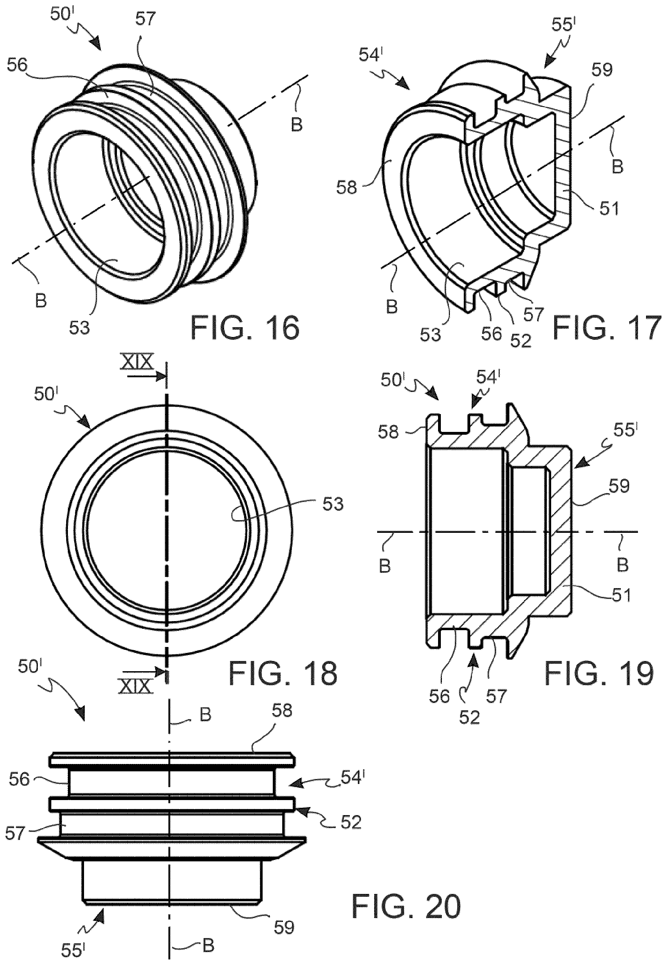

- figure 16 shows an angled isometric view of a closing bushing of the assembly according to the invention;
- figure 17 shows a sectional isometric view of the closing bushing in figure 16 by means of an axial sectional plane XIX;
- figure 18 shows an axial orthogonal view of the closing bushing in figure 17;
- figure 19 shows a lateral sectional view of the closing bushing in figure 17;
- figure 20 shows a lateral sectional view of the closing bushing in figure 17;
- figure 21 shows a sectional view of a coupling assembly according to the invention for a double-containment pipe system, the coupling shell of which has two opposite coaxial openings, for mutually connecting coaxial double-containment pipe sections, wherein a half-shell has been removed to illustrate the lay-out of the components in the coupling shell;
- figure 22 shows an isometric view of the section in figure 21;
- figure 23 shows an isometric view of the coupling assembly in figure 21, when it is assembled;
- figure 24 shows a sectional view of a coupling assembly according to the invention for a double-containment pipe system, the coupling shell of which has two opposite openings orthogonal to each other, for mutually connecting double-containment pipe sections orthogonal to each other, wherein a half-shell has been removed to illustrate the lay-out of the components in the coupling shell;
- figure 25 shows an isometric view of the coupling assembly in figure 25;
- figure 26 shows an isometric view of the coupling assembly in figure 24, when it is assembled

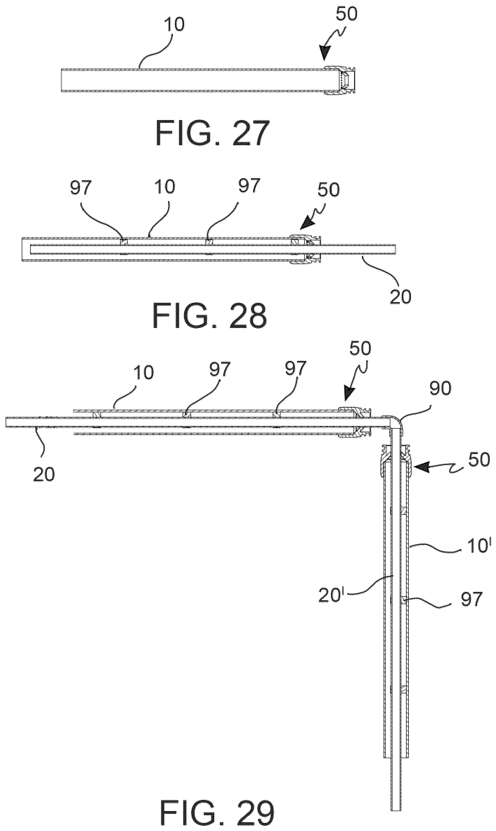

- figure 27 illustrates a step of the coupling method according to the invention, in which a first connection bushing is sealingly fastened to a free end of a first outer pipe element;
- figure 28 illustrates a step of the coupling method, in which a first inner pipe element is inserted into the first connection bushing, causing the first end of the first inner pipe element to exit with respect to the first connection bushing;
- figure 29 illustrates a step of the coupling method, in which a first free end of a second outer pipe element is fastened to a second connection bushing, wherein a second inner pipe element is inserted into the second outer pipe element and into the second connection bushing, causing the first end of the second inner pipe element to exit with respect to the second connection bushing, and in which the first end and the second end of an inner pipe coupling is fastened to the first free end of the first inner pipe element and to the first end of the second inner pipe element, respectively;

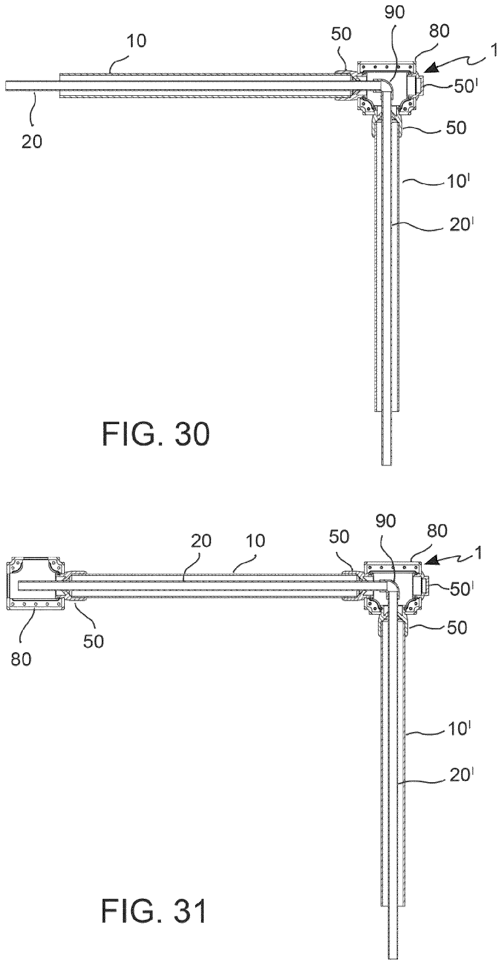

- figure 30 illustrates a step of the coupling method, in which the first free end of the first bushing and the first free end of the second bushing are inserted into a first connection opening and into a second connection opening of a first half-shell of the coupling shell, respectively, and in which the first free end of a closing bushing is inserted into the connection opening of the first half-shell not occupied by the first connection bushing and by the second connection bushing;
- figure 31 illustrates a step of the coupling method, in which a further coupling assembly according to the invention is mounted to a second free end of an outer pipe element;

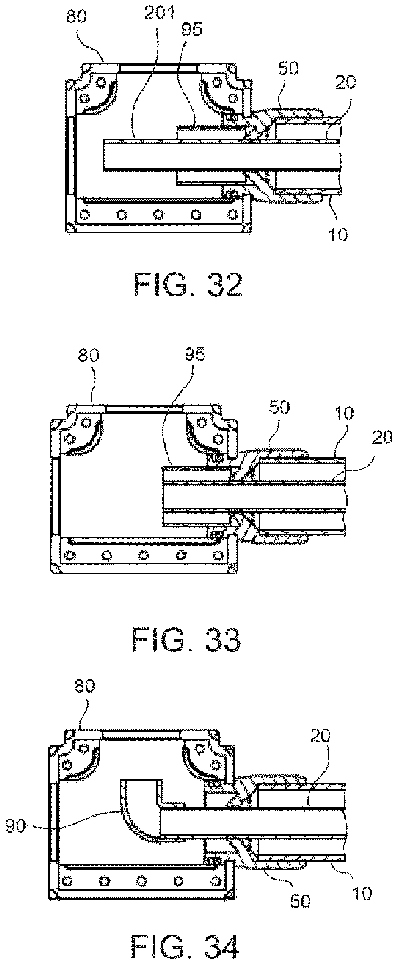

- figure 32 illustrates a step of the coupling method, in which a positioning bushing is used to define a cutting position of an excess section of the inner pipe element, so that the second end of the inner pipe element, after cutting the excess part, is in a correct position for mounting a further inner pipe coupling, so that said further coupling is correctly positioned in a further coupling shell of the further coupling assembly;
- figure 33 shows a step of the method after removing the positioning bushing;
- figure 34 shows a step of the method in which a further inner pipe coupling is correctly assembled.

### Description of preferred embodiments

With reference to the figures, a coupling assembly for a double-containment pipe system according to the invention, is globally denoted with reference numeral 1.

A double-containment pipe system 100 comprises an inner pipe 20 for conveying a fluid, an outer containment pipe 10 arranged about said inner pipe 20 forming a cavity 30 between said inner pipe 20 and said outer pipe 10.

For example, the outer containment pipe 10 is coaxial to said inner pipe 20.

For example, said cavity 30 is cylindrical.

Said coupling assembly 1 comprises a coupling shell 80, for example having a box-like shape, comprising two half-shells 81, 82 which are removably couplable to each other fluid-tight along a joining profile 85 between said two half-shells 81, 82.

A joining profile 85 is understood to mean a joining edge, or a joining surface, along which the two half-shells can be mutually joined to form the coupling shell 80.

In other words, each half-shell comprises a joining surface adapted to be coupled to a corresponding joining surface of the other half-shell, together forming the coupling shell 80.

The two half-shells mutually 81, 82 define an inner hollow compartment 83 adapted to accommodate part of said inner pipe 20.

The coupling shell 80 defines a plurality of connection openings 86, each connection opening 86 of said plurality being divided, by said joining profile 85, into two opening portions, each belonging to one of said two half-shells 81, 82, respectively.

According to an embodiment, the joining profile 85 lies on a joining plane D, for example the joining edge lies on a joining plane D, for example the joining surface of each half-shell 81, 82 lies on a joining plane D, when the two half-shells 81, 82 are mutually assembled.

According to an embodiment, each connection opening 86 of said plurality is divided in half by said joining profile 85, or by said joining plane D.

According to an embodiment, each connection opening 86 of said plurality defines an opening axis 87 lying on said joining plane D.

The coupling assembly 1 comprises at least one connection bushing 50, each said at least one connection bushing 50 defining a central bushing axis B-B, a first axial end portion 54 ending with a first free end 58, an opposite second axial end portion 55 ending with a second free end 59, an inner side surface 53 and an outer side surface 52.

The second axial end portion 55 comprising connection means 62 for connecting said connection bushing 50 to a free end of a pipe element of said outer pipe 10.

The first axial end portion 54 and a respective connection opening 86 of said coupling shell 80 have mutually complementary shapes and comprise fluid-tight sealing means 71 and mutual engagement means 72.

According to an embodiment, the first axial end portion 54 has a circular section with the center on the central bushing axis B-B, and also the respective connection opening 86 has a circular section with the center on an opening axis 87.

When the connection bushing 50 is mounted to the coupling shell 80, the central bushing axis B-B is coaxial to the opening axis 87.

According to an embodiment, the fluid-tight sealing means 71 and the engagement means 72 are different from each other.

According to an embodiment, all of the connection openings 86 of said plurality are equal to one another, and the first axial end portions 54 of all said connection bushinges 50 are equal to one another.

According to an embodiment, the fluid-tight sealing means 71 comprise a first annular groove 56, e.g., coaxial to said bushing axis B-B, made in said first axial end portion 54 from said outer side surface 52 an annular seal 73 accommodated in said first annular groove 56, and wherein said coupling shell 80 comprises an inner cylindrical abutment surface 84 made close to said connection opening 86 and, for example coaxial to said opening axis 87, said annular seal being compressed between said first annular groove 56 and said cylindrical abutment surface 84.

According to an embodiment, not shown in the figures, the fluid-tight sealing means 71 comprise a first annular groove made in said coupling shell 80 close to said connection opening 86 and, for example coaxial to said opening axis 87, a cylindrical portion of said outer side surface 52 of said first axial end portion 54, an annular seal portion accommodated in said first annular groove and compressed between said first annular groove 56 and said cylindrical abutment surface 84.

According to an embodiment, the engagement means 72 comprise undercut engagement means.

According to an embodiment, the engagement means 72 comprise a second annular groove 57, for example coaxial to said bushing axis B-B, and made in said first axial end portion 54 from said outer side surface 52, and wherein said connection opening 86 of said coupling shell 80 defines an opening edge 88 forming an annular protrusion complementary to said second annular groove 57 and configured to be engaged in said second annular groove 57.

According to another embodiment, not shown in the figures, the engagement means 72 comprise a second annular groove made along an annular opening edge 88 of said connection opening 86 of said coupling shell 80 and, for example coaxial to said opening axis 87, and an annular protrusion complementary to said annular groove, radially projecting from said first axial end portion 54 from said outer side surface 52, configured to be engaged in said second annular groove.

According to an embodiment, said fluid-tight sealing means 71 are axially interposed between said engagement means 72 and said first free end 58 of said first axial end portion 54 of said connection bushing 50.

According to an embodiment, the at least one connection bushing 50 comprises a inner radial support septum 60 axially interposed between said first end portion 54 and said second end portion 55.

According to an embodiment, the inner radial support septum 60 has a central through hole 61 for allowing the passage of a pipe element of said inner pipe 20, said inner radial support septum 60 extending from said inner side surface 53 to said central through hole 61 and having a first face 64 facing said first free end 58 and an opposite second face 65 facing said second free end 59.

According to an embodiment the second face 65 forms an invitation surface converging in a direction proceeding from said second free end 59 towards said first free end 58.

According to an embodiment, the second face 65 has a conical shape.

According to an embodiment, the connection means 62 comprise a joining seat axially extending into said connection bushing 50 from said second free end 59.

According to an embodiment, the joining seat extends to said inner radial support septum 60.

According to an embodiment, the inner radial support septum 60 comprises a plurality of through drainage holes 66 crossing it from said first face 64 to said second face 65.

According to an embodiment, the through drainage holes 66 of said plurality are distributed along a circumference, for example coaxial to the central bushing axis B-B.

According to an embodiment, the above circumference is close to said inner side surface 53.

According to an embodiment, the coupling assembly 1 further comprises at least one closing bushing 50' associated with a respective connection opening 86 of said coupling shell 80 not occupied by said at least one connection bushing 50, comprising a first axial end portion 54, each said at least one closing bushing 50 defining a central closing bushing axis B'-B', a first axial end portion 54' of closing bushing ending with a first free end 58',an opposite second axial end portion 55' of closing bushing ending with a second free end 59', an inner side surface 53' and an outer side surface 52', wherein said first axial end portion 54' of closing bushing has shape and dimensions equal to said first axial end portion 54 of said at least one connection bushing 50, and wherein each said at least one closing bushing 50' comprises a closing wall 51 transversal to said closing bushing axis B'-B'.

According to an embodiment, the coupling shell 80 comprises one or more seals 74 interposed between said two half-shells 81, 82 along said joining profile 85.

According to an embodiment, the plurality of connection openings 86 of the coupling shell 80 is formed by two, or three, or four openings.

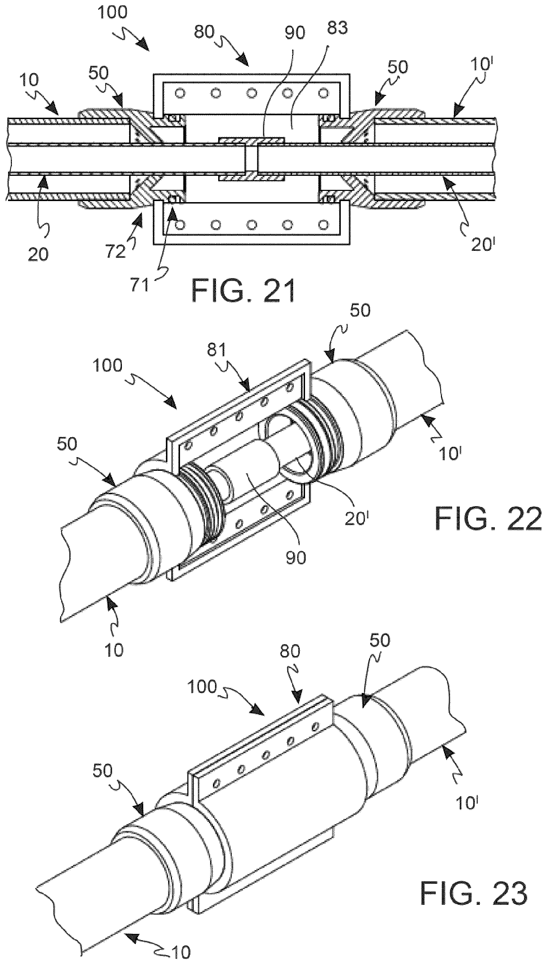

For example, figures 21 to 23 illustrate an embodiment of the coupling assembly 1, wherein the coupling shell 80 has two coaxial openings.

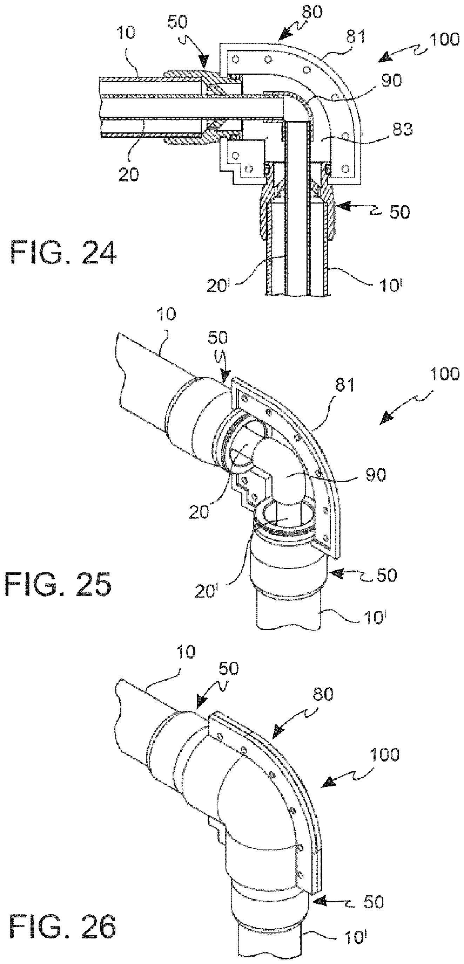

For example, figures 24 to 26 illustrate an embodiment of the coupling assembly 1, wherein the coupling shell 80 has two openings orthogonal to each other.

According to an embodiment, the axes of two of said connection openings 86 are coaxial to each other and the axis of each further opening 86 is orthogonal to the axes of said two openings.

According to an embodiment, the shell 80 is made of a polymeric material, e.g., polyethylene or PVC.

According to an embodiment, the connection bushinges 50 are made of a polymeric material, e.g., polyethylene or PVC.

According to an embodiment, the closing bushinges 50' are made of a polymeric material, e.g., polyethylene or PVC.

According to an embodiment, the first and the second outer pipe element is made of a polymeric material, e.g., polyethylene or PVC.

According to another aspect of the present invention the above objects and advantages are achieved by a coupling method for connecting a double-containment pipe system 100.

The method comprises a step of providing a coupling assembly 1 according to any feature described above in the present description.

Furthermore, the method comprises the steps of providing a first outer pipe element 10 having a first outer pipe element first end; providing a second outer pipe element 10' having a second outer pipe element first end; providing a first inner pipe element 20 having a first inner pipe element first end; providing a second inner pipe element 20' having a second inner pipe element first end; providing an inner pipe coupling 90 having an inner pipe coupling first end and second end.

The method comprises a step of sealingly fastening said first free end of said first outer pipe element 10 to said second free axial end 55 of a first connection bushing of said at least one connection bushing 50.

Furthermore, the method comprises a step of inserting said first inner pipe element 20 into said first outer pipe element 10 and into said first connection bushing 50 causing said first end of said first inner pipe element 20 to exit with respect to said first connection bushing of said at least one connection bushing 50.

According to an embodiment, the method comprises a step of providing at least one radial centering spacer element 97, and axially interposing said at least one radial centering spacer element 97 between said first inner pipe element 20 and said first outer pipe element 10.

The method further comprises a step of sealingly fastening said first free end of said second outer pipe element 10' to said second free axial end 55 of a second connection bushing of said at least one connection bushing 50, and a step of inserting said second inner pipe element 20' into said second outer pipe element 10' and said second connection bushing 50 by causing said first end of said second inner pipe element 20' to exit with respect to said second connection bushing of said at least one connection bushing 50.

According to an embodiment, the method comprises a step of providing at least one radial centering spacer 97, and axially interposing said at least one radial centering spacer 97 between said second inner pipe element 20' and said second outer pipe element 10' .

The method further comprises a step of sealingly fastening said first end and said second end of said inner pipe coupling 90 to said first free end of said first inner pipe element 20 and to said first end of said second inner pipe element 20', respectively.

The method further comprises a step of inserting said first free end 54 of said first bushing and said first free end 54 of said second bushing into a first connection opening 86 and into a second connection opening 86 of a first half-shell 81 of said coupling shell 80, respectively.

The method further comprises a step of inserting said first free end 54' of a closing bushing of said at least one closing bushing 50' into each connection opening 86 of said first half-shell 81 not occupied by said first connection bushing and said second connection bushing.

Finally, the method comprises a step of coupling said second half-shell 82 to said first half-shell 81 to form said coupling shell 80.

According to an embodiment, said step of sealingly fastening said first free end of said first outer pipe element 10 to said second free axial end 55 of a first connection bushing of said at least one connection bushing 50, and said step of sealingly fastening said first free end of said second outer pipe element 10' to said second free axial end 55 of a second connection bushing of said at least one connection bushing 50, is performed in one of the following ways:
- gluing by means of interposing a glue;
- heat sealing;
- joining by interference
- screwing.

According to an embodiment of the method, the method comprises a step of providing a further coupling assembly 1 as described above, a step of sealingly fastening said second free end of said first outer pipe element 10 to a second free axial end 55 a first connection bushing 50 of said further coupling assembly 1, causing said second free end of said first inner pipe element 20 to pass through said first connection bushing 50 of said further coupling assembly 1 and causing said second free end of said first inner pipe element 20 to exit from said first connection bushing 50 of said further coupling assembly 1, for an excess section 201.

According to an embodiment, the method comprises a step of cutting said excess section 201 of said first inner pipe element 20.

According to an embodiment of the method, said step of cutting said excess section comprises the steps of:
- providing a positioning bushing having a predetermined length along a central axis of said positioning bushing, said length being equal to a correct cutting length of said second end of said first inner pipe element 20 relative to an inner axial abutment surface of said first connection bushing 50 of said further coupling assembly 1;
- positioning a first axial end of said positioning bushing 95 in abutment with said inner axial abutment surface;
- after said positioning step, cutting said excess section 201 of said first inner pipe element 20 at a second axial end of said positioning bushing 95, opposite to said first axial end.

According to an embodiment, said inner axial abutment surface is defined by said inner support septum 60 of said connection bushing 50, for example by said second face 65 of said inner support septum 60.

According to an embodiment, the method comprises the steps of:
- providing a further inner pipe coupling 90',
- removing said positioning bushing 95 after performing said step of cutting said excess section 201;
- sealingly fastening said further coupling 90' to said second free end of said first inner pipe element 20, after said removal step.

According to an embodiment, the method comprises a step of providing additional inner pipe elements, additional outer pipe elements, additional coupling assemblies, and repeating the steps described above until completing a double-containment pipe plant, according to the required specifications.

Those skilled in the art may make changes and adaptations to the embodiments of the device described above or replace elements with others which are functionally equivalent in order to meet contingent needs without departing from the scope of the following claims. Each of the features described as belonging to a possible embodiment can be made irrespective of the other embodiments described.

### Reference sign list

1 coupling assembly
10 outer containment pipe
20 inner pipe
30 cylindrical cavity
50 connection bushing
50' closing bushing
51 closing wall
52 outer side surface
53 inner side surface
54 first axial end portion of connection bushing
54' first closing bushing end portion
55 second axial end portion of bushing connection
55' second axial end portion of bushing closing
56 first annular groove
57 second annular groove
58 free end of first end portion
58' free end of first closing bushing end portion
59 free end of second end portion
59' free end of second closing bushing end portion
60 inner support septum
61 central through hole
62 connection means
63 cylindrical countersink
64 first face
65 second face
66 drainage holes
71 fluid-tight sealing means
72 engagement means
73 annular seal
74 flat seal
80 coupling shell
81, 82 half-shells
83 hollow compartment
84 inner cylindrical abutment surface
85 joining profile
86 connection opening
87 connection opening axis
90 inner pipe coupling
95 positioning bushing
97 radial centering spacer element
100 double-containment pipe system
B-B central axis of connection bushing
B'B' central axis of closing bushing
D joining plane.

## Claims

1. A coupling assembly (1) for a double-containment pipe system (100), said double-containment pipe system (100) comprising an inner pipe (20) for conveying a fluid, an outer containment pipe (10) arranged about said inner pipe (20) forming a cavity (30) between said inner pipe (20) and said outer pipe (10);
wherein said coupling assembly (1) comprises:
- a coupling shell (80) comprising two half-shells (81, 82) removably and fluid-tight coupled to each other along a joining profile (85) between said two half-shells (81, 82), said two half-shells (81, 82) mutually defining an inner hollow compartment (83) adapted to accommodate part of said inner pipe (20), said coupling shell (80) defining a plurality of connection openings (86), each connection opening (86) of said plurality being divided, by said joining profile (85), into two opening portions, each belonging to one of said two half-shells, respectively;
- at least one connection bushing (50), each said at least one connection bushing (50) defining a central bushing axis (B-B), a first axial end portion (54) ending with a first free end (58), an opposite second axial end portion (55) ending with a second free end (59), an inner side surface (53) and an outer side surface (52), said second axial end portion (55) comprising connection means (62) for connecting said connection bushing (50) to a free end of a pipe element of said outer pipe (10),
- wherein said first axial end portion (54) and a respective connection opening of said plurality of connection openings (86) of said coupling shell (80) have mutually complementary shapes and comprise therebetween fluid-tight sealing means (71) and engagement means (72).

2. A coupling assembly (1) according to claim (1), wherein said fluid-tight sealing means (71) and said engagement means (72) are different from each other.

3. A coupling assembly (1) according to claim 1 or 2, wherein all the connection openings (86) of said plurality are equal to one another, and wherein said first axial portion (54) of all said at least one connection bushing (50) are equal to one another.

4. A coupling assembly (1) according to claim 1, wherein said fluid-tight sealing means (71) comprise a first annular groove (56), made in said first axial end portion (54) from said outer side surface (52) an annular seal (73) accommodated in said first annular groove (56), and wherein said coupling shell (80) comprises an inner cylindrical abutment surface (84) made close to said connection opening (86), said annular seal being compressed between said first annular groove (56) and said cylindrical abutment surface (84), or wherein
said fluid-tight sealing means (71) comprise a first annular groove made in said coupling shell (80) close to said connection opening (86), a cylindrical portion of said outer side surface (52) of said first axial end portion (54), an annular seal portion accommodated in said first annular groove and compressed between said first annular groove (56) and said cylindrical abutment surface (84).

5. A coupling assembly (1) according to at least one preceding claim, wherein said engagement means (72) comprise undercut engagement means.

6. A coupling assembly (1) according to claim 5, wherein said engagement means (72) comprise a second annular groove (57) coaxial to said bushing axis (B-B) and made in said first axial end portion (54) from said outer side surface (52), and wherein said connection opening (86) of said coupling shell (80) defines an opening edge (88) forming an annular protrusion complementary to said second annular groove (57) and configured to be engaged in said second annular groove (57), or wherein
wherein said engagement means (72) comprise a second annular groove made along an annular opening edge (88) of said connection opening (86) of said coupling shell (80), and an annular protrusion complementary to said annular groove projecting radially from said first axial end portion (54) from said outer side surface (52), configured to be engaged in said second annular groove.

7. A coupling assembly (1) according to claims 3 and 5, wherein said fluid-tight sealing means (71) are axially interposed between said engagement means (72) and said first free end (58) of said first axial end portion (54) of said connection bushing (50).

8. A coupling assembly (1) according to at least one preceding claim, wherein at least one connection bushing (50) comprises a inner radial support septum (60) axially interposed between said first end portion (54) and said second end portion (55), said inner radial support septum (60) having a central through hole (61) for allowing the passage of a pipe element of said inner pipe (20), said inner radial support septum (60) extending from said inner side surface (53) to said central through hole (61) and having a first face (64) facing said first free end (58) and an opposite second face (65) facing said second free end (59).

9. A coupling assembly (1) according to claim 8, wherein said second face (65) forms an invitation surface converging in a direction proceeding from said second free end (59) towards said first free end (58).

10. A coupling assembly (1) according to claim 1, wherein said connection means (62) comprise a joining seat extending axially into said connection bushing (50) from said second free end (59) to said inner radial support septum (60).

11. A coupling assembly (1) according to claim 8, wherein said inner radial support septum (60) comprises a plurality of through drainage holes (66) crossing it from said first face (64) to said second face (65).

12. A coupling assembly (1) according to claim 11, wherein the through drainage holes (66) of said plurality are distributed along a circumference coaxial to the central bushing axis (B-B).

13. A coupling assembly (1) according to at least one preceding claim, further comprising at least one closing bushing (50') associable with a respective connection opening (86) of said coupling shell (80) not occupied by said at least one connection bushing (50), comprising a first axial end portion (54), each said at least one closing bushing (50) defining a central axis (B'-B') of closing bushing, a first axial end portion (54') of closing bushing ending with a first free end (58'), an opposite second axial end portion (55') of closing bushing ending with a second free end (59'), an inner side surface (53') and an outer side surface (52'), wherein said first axial end portion (54') of closing bushing has the same shape and dimensions as said first axial end portion (54) of said at least one connection bushing (50), and wherein each said at least one closing bushing (50') comprises a closing wall (51) transversal to said closing bushing axis (B'-B').

14. A coupling assembly (1) according to at least one preceding claim, wherein said coupling shell (80) comprises one or more seals (74) interposed between said two half-shells (81, 82) along said joining profile (85).

15. A coupling method for connecting a double-containment pipe system (100), comprising the following steps:
- providing a coupling assembly (1) according to at least one preceding claim;
- providing a first outer pipe element (10) having a first outer pipe element first end;
- providing a second outer pipe element (10') having a second outer pipe element first end;
- providing a first inner pipe element (20) having a first inner pipe element first end;
- providing a second inner pipe element (20') having a second inner pipe element first end;
- providing an inner pipe coupling (90) having an inner pipe coupling first end and second end;
- sealingly fastening said first free end of said first outer pipe element (10) to said second free axial end (55) of a first connection bushing of said at least one connection bushing (50);
- inserting said first inner pipe element (20) into said first outer pipe element (10) and into said first connection bushing (50) causing said first end of said first inner pipe element (20) to exit with respect to said first connection bushing of said at least one connection bushing (50);
- sealingly fastening said first free end of said second outer pipe element (10') to said second free axial end (55) of a second connection bushing of said at least one connection bushing (50);
- inserting said second inner pipe element (20') into said second outer pipe element (10') and into said second connection bushing (50) causing said first end of said second inner pipe element (20') to exit with respect to said second connection bushing of said at least one connection bushing (50);
- sealingly fastening said first end and said second end of said inner pipe coupling (90) to said first free end of said first inner pipe element (20) and to said first end of said second inner pipe element (20'), respectively;
- inserting said first free end (54) of said first bushing and said first free end (54) of said second bushing into a first connection opening (86) and a second connection opening (86) of a first half-shell (81) of said coupling shell (80), respectively;
- inserting said first free end (54') of a closing bushing of said at least one closing bushing (50') into each connection opening (86) of said first half-shell (81) not occupied by said first connection bushing and said second connection bushing;
- coupling said second half-shell (82) to said first half-shell (81) to form said coupling shell (80).

16. A method according to claim 15, wherein said step of sealingly fastening said first free end of said first outer pipe element (10) to said second free axial end (55) of a first connection bushing of said at least one connection bushing (50), and said step of sealingly fastening said first free end of said second outer pipe element (10') to said second free axial end (55) of a second connection bushing of said at least one connection bushing (50), is performed in one of the following ways:
- gluing by means of interposing a glue;
- heat sealing;
- joining by interference
- screwing.

17. A method according to claim 16, comprising:
- providing a further coupling assembly (1) according to at least one of claims 1 to 14;
- sealingly fastening said second free end of said first outer pipe element (10) to a second free axial end (55) a first connection bushing (50) of said further coupling assembly (1), causing said second free end of said first inner pipe element (20) to pass through said first connection bushing (50) of said further coupling assembly (1) and causing said second free end of said first inner pipe element (20) to exit said first connection bushing (50) of said further coupling assembly (1), for an excess section (201).

18. A method according to claim 17, comprising a step of cutting said excess section (201) of said first inner pipe element (20), wherein said step of cutting said excess section comprises the steps of:
- providing a positioning bushing (95) having a predetermined length along a central axis of said positioning bushing, said length being equal to a correct predetermined cutting length of said second end of said first inner pipe element (20) with respect to an inner axial abutment surface of said first connection bushing (50) of said further coupling assembly (1);
- positioning a first axial end of said positioning bushing (95) in abutment with said inner axial abutment surface;
- after said positioning step, cutting said excess section (201) of said first inner pipe element (20) at a second axial end of said positioning bushing (95), opposite to said first axial end.
